# EUROPÄISCHE PATENTSCHRIFT

(11) **EP 2 542 849 B1**
(45) Veröffentlichungstag und Bekanntmachung des Hinweises auf die Patenterteilung: **01.04.2015**
(21) Anmeldenummer: 11705541.8
(22) Anmeldetag: 23.02.2011
(51) Int. Cl.: F27B 7/26, F16C 13/00, F23G 5/20

(54) **ANTRIEB FÜR EINE DREHTROMMEL**
DRIVE FOR A ROTARY DRUM
ENTRAÎNEMENT POUR UN TAMBOUR ROTATIF

(30) Priorität: 15.09.2010 DE 102010037560; 01.03.2010 DE 102010009758
(43) Veröffentlichungstag der Anmeldung: 09.01.2013
(73) Patentinhaber: ThyssenKrupp Industrial Solutions AG, 45143 Essen (DE)
(72) Erfinder: KÄSTINGSCHÄFER, Gerhard, 59329 Wadersloh (DE); AUF DEM VENNE, Johannes, 59320 Ennigerloh (DE)
(74) Vertreter: Tetzner, Michael
(86) Internationale Anmeldenummer: PCT/EP2011/052689
(87) Internationale Veröffentlichungsnummer: WO 2011/107383

(56) Entgegenhaltungen:
- DE-U1- 9 013 226
- US-A- 2 908 179
- KASTINGSCHAFER G: "VORSTELLUNG EINES NEUEN DREHOFENKONZEPTES. ÖPRESENTATION OF A NEW ROTARY KILN CONCEPT", ZKG INTERNATIONAL, BAUVERLAG BV., G]TERSLOH, DE, Bd. 46, Nr. 12, 1. Dezember 1993 (1993-12-01), Seiten 769-774, XP000440226, ISSN: 0949-0205

## Beschreibung

Die Erfindung betrifft einen Antrieb für eine Drehtrommel mit relativ großen Abmessungen, insbesondere für einen Drehrohrofen, eine Kühltrommel, eine Trommelmühle oder dgl.

Bei derartigen Drehtrommeln, insbesondere bei Zement-Drehrohröfen wird das Antriebsmoment des Antriebsmotors über ein Vorgelege (Ritzel und Zahnkranz) auf die Drehtrommel übertragen. Die Gehäuse der Ritzellager sind dabei auf dem Ofenfundament befestigt und der Zahnkranz ist auf der Außenumfangsseite der Drehtrommel drehfest mit einer geeigneten Zahnkranzbefestigung montiert.

Die Belastung des Vorgeleges ist abhängig vom erforderlichen Drehmoment des Ofens und von der Qualität des Zahneingriffs zwischen Ritzel und Zahnkranz. Der Rundlauf des Zahnkranzes und die Ausrichtung des Ritzels relativ zum Zahnkranz beeinflussen den Zahneingriff. Bei optimalem Zahneingriff sind die Achsen von Ritzel und Zahnkranz parallel und der Abstand ist so eingestellt, dass die Verzahnungen aufeinander abwälzen kann.

Bei stark schwankenden Betriebsbedingungen, insbesondere bei einer thermischen Belastung der Drehtrommel, verkrümmt sich die Ofenachse und der Abstand zwischen Ritzel und Zahnkranz verändert sich. Der sich dadurch ergebene Taumelund Radialschlag sowie der geänderte Achsabstand des Zahnkranzes belasten den Zahneingriff, sodass Überlastungen der Verzahnung entstehen, die zu Schäden führen können. Es sind daher schon verschiedene technische Lösungen vorgeschlagen worden, um den Zahneingriff zwischen Ritzel und Zahnkranz unabhängig oder zumindest weitgehend unabhängig von den Betriebsbedingungen der Drehtrommel zu machen.

In der DE 90 13 226 U1 wird der Einsatz eines kippbeweglichen Ritzels vorgeschlagen, wodurch betriebsbedingte Winkelabweichungen zwischen den Achsen von Ritzel und Zahnkranz weitgehend ausgeglichen werden können. Die betriebsbedingte Axialbewegung des Zahnkranzes (Längenänderung der Drehtrommel) wird durch eine Gleitbewegung in der Verzahnung von Ritzel und Zahnkranz aufgenommen. Allerdings kann ein Radialschlag des Zahnkranzes nur mit einem kippbeweglichen Ritzel nicht ausgeglichen werden.

Zur Aufrechterhaltung eines optimalen Verzahnungseingriffs zwischen Zahnkranz und Ritzel schlägt die DE 90 13 266 U1 daher im Bereich Zahnkranz/Ritzel eine Überwachungseinrichtung vor, die eine Abstandsmessung zwischen Ritzel und einer Bezugsfläche am Zahnkranz durchführt. Das Ritzel ist mit seiner Antriebswelle außerdem relativ zum Zahnkranz schwenkbeweglich gehaltert. Über eine Steuereinrichtung wird das Ritzel in Abhängigkeit der Abstandsmessung derart verstellt, dass immer ein konstanter Verzahnungseingriff zwischen Zahnkranz und Ritzel gewährleistet wird.

Aus der Praxis ist weiterhin eine andere Lösung bekannt, bei der das Ritzel in einem sogenannten Ritzelwagen starr gelagert ist. Der Ritzelwagen wird über Rollen radial und axial am Zahnkranz geführt. Durch die Führung des Ritzelwagens am Zahnkranz folgt der Ritzelwagen und damit das Ritzel allen Bewegungen des Zahnkranzes. Die Verbindung zwischen Ritzelwagen und Zahnkranz ist formschlüssig.

Der Ritzelwagen ist weiterhin auf dem Ofenfundament abgestützt. Diese Stütze hält den Ritzelwagen tangential zum Zahnkranz in Position und weist zwei Gelenke auf, die es ermöglichen, dass der Ritzelwagen dem Taumel- und Radialschlag und der Axialverschiebung des Zahnkranzes ohne Zwängungen folgen kann. Nachteilig bei dieser Ausführung ist aber die Drehverbindung zwischen Ritzelwagen und dem mit dem Ofenfundament ortsfest verbundenen Hauptgetriebe. Um die Relativbewegungen zwischen Ritzelwagen und Hauptgetriebe zu kompensieren, wird das Drehmoment vom Hauptgetriebe auf den Ritzelwagen mit einer Gelenkwelle (Kardanwelle) übertragen. Diese Gelenkwelle kann einen Winkelversatz und die Längenänderung zwischen Hauptgetriebe und Ritzelwagen ausgleichen. Sie ist aber auf der Hochmomentenseite des Hauptgetriebes angeordnet, sodass die Gelenke entsprechend hohen Beanspruchungen ausgesetzt sind. Die mit der Längenausdehnung entstehenden, beachtlichen Kräfte führen dazu, dass das Ritzel nicht mehr kraftfrei den Bewegungen des Zahnkranzes folgen kann. Um diese Problematik zu entschärfen wurde bereits vorgeschlagen, die Verzahnung der Getriebestufe im Ritzelwagen für den Längenausgleich zu nutzen. Das Problem wird dadurch zwar entschärft, aber nicht gelöst. Die Drehverbindung (Kardanwelle) auf der Hochmomentenseite des Hauptgetriebes bleibt weiterhin problematisch..Hinzu kommt, dass diese technische Lösung aufwendig und bis zu 40% teurer als ein konventioneller Antrieb mit starr gelagertem Ritzel ist.

Die US 42 34 237 A, US 29 08 179 A, CH 231 753 A und DE 697 258 offenbaren ferner ein weiteres Antriebskonzept, bei dem der Ritzelkörper sowohl zum Antrieb als auch als Auflager für die anzutreibende Trommel dient. Fertigungs- und betriebsbedingte Taumelschläge der Trommel können mit diesem Antriebskonzept jedoch nicht kompensiert werden.

Der Erfindung liegt daher die Aufgabe zugrunde eine neue Lösung zu finden, bei der sowohl der Taumel- als auch der Radialschlag des Zahnkranzes zuverlässig aufgefangen werden kann.

Erfindungsgemäß wird diese Aufgabe durch die Merkmale des Anspruches 1 gelöst.

Der erfindungsgemäße Antrieb für eine Drehtrommel besteht im Wesentlichen aus
a. einem Zahnkranz, der drehfest auf der Außenumfangsseite der Drehtrommel befestigbar ist,
b. einem mit dem Zahnkranz in Verzahnungseingriff stehendes Ritzel, das kippbeweglich und drehfest auf einer Antriebswelle angeordnet ist, wobei das Ritzel mit seiner Antriebswelle relativ zum Zahnkranz schwenkbeweglich gehaltert ist und
c. einem Antriebsmotor zum Antreiben der Antriebswelle.

Weiterhin steht das Ritzel neben dem Verzahnungseingriff auch in einem formschlüssigen Wälzkontakt mit dem Zahnkranz, wobei zur Herstellung des formschlüssigen Wälzkontakts auf beiden Seiten des Zahnkranzes konzentrisch zum Zahnkranz angeordnete zylindrische Wälzbahnen ausgebildet sind, und das Ritzel zwei konzentrisch um die Antriebswelle ausgebildete, zylindrische Kontaktflächen aufweist, wobei jeweils eine Kontaktfläche des Ritzels mit einer Wälzbahn des Zahnkranzes in Wälzkontakt steht.

Das kippbewegliche Ritzel ermöglicht einen Ausgleich des Taumelschlags des Zahnkranzes. Eine Axialbewegung des Zahnkranzes kann durch eine Gleitbewegung in der Verzahnung von Ritzel und Zahnkranz oder durch eine Gleitbewegung des Ritzels in den Lagern der Antriebswelle aufgenommen werden. In diesem Fall wird das Ritzel in axialer Richtung durch den Zahnkranz geführt.

Durch den zusätzlichen, formschlüssigen Wälzkontakt des Ritzels mit dem Zahnkranz kann außerdem auch ein etwaiger Radialschlag des Zahnkranzes ausgeglichen werden. Der formschlüssige Wälzkontakt gewährleistet zusätzlich immer einen konstanten Verzahnungseingriff zwischen Ritzel und Zahnkranz, da das Ritzel einem etwaigen Radialschlag des Zahnkranzes durch den formschlüssigen Wälzkontakt folgt.

Weitere Ausgestaltungen der Erfindung sind Gegenstand der Unteransprüche.

Die Kontaktflächen des Ritzels weisen vorzugsweise einen Durchmesser auf, der dem Durchmesser des Wälzkreises des Ritzels entspricht. Die Wälzbahnen des Zahnkranzes weisen diesbezüglich einen Durchmesser auf, der dem Durchmesser des Wälzkreises des Zahnkranzes entspricht. Auf diese Weise wird erreicht, dass die Wälzbahnen ohne Schlupf aufeinander abwälzen.

Die Kontaktflächen können beispielsweise durch rotationssymmetrische Absätze am Ritzel gebildet werden. In gleicher Weise können auch die Wälzbahnen durch rotationssymmetrische Absätze am Zahnkranz ausgebildet werden. Die Absätze an Ritzel und Zahnkranz können durch eine entsprechende Ausbildung des Ritzels/Zahnkranzes oder durch zusätzliche Bauteile, insbesondere konzentrische Ringe, realisiert werden, die am Ritzel/Zahnkranz befestigt werden.

Das kippbewegliche Ritzel weist vorzugsweise einen Ritzelinnenkörper und einen Ritzelaußenkörper auf, die zur Übertragung der Drehbewegung der Antriebswelle über eine Bogenverzahnung miteinander gekoppelt sind, wobei der Ritzelaußenkörper einen mit dem Zahnkranz in Eingriff kommende Verzahnung aufweist.

Gemäß einer weiteren Ausgestaltung der Erfindung ist zwischen Ritzel und Zahnkranz ein konzentrischer und drehbar gelagerter Ring zur Erzeugung des formschlüssigen Wälzkontaktes vorgesehen.

Das Ritzel kann in axialer Richtung in Lagern der Antriebswelle verschieblich sein und/oder wird in axialer Richtung durch den Zahnkranz geführt.

Die Antriebswelle ist zweckmäßigerweise direkt an ein Hauptgetriebe angekoppelt. Weiterhin kann vorgesehen werden, dass der Antriebsmotor über eine Gelenkwelle mit dem Hauptgetriebe verbunden ist, wobei eine am Hauptgetriebe vorgesehene Drehmomentstütze und die Gelenkwelle eine Axialbewegung der Antriebswelle aufnehmen kann.

Die mit dem Hauptgetriebe verbundene Gelenkwelle kann in Richtung der Antriebswelle oder winklig hierzu angeordnet werden.

Durch den optimalen Zahneingriff ist es gemäß einer weiteren Ausgestaltung der Erfindung möglich, einen Zahnkranz und ein Ritzel mit gehärteten Zahnflanken einzusetzen, wodurch das Vorgelege schmaler und damit kostengünstiger gebaut werden kann.

Weitere Vorteile und Ausgestaltungen der Erfindung werden im Folgenden anhand der Beschreibung einiger Ausführungsbeispiele und der Zeichnung näher erläutert.

In der Zeichnung zeigen
- Fig. 1: eine teilweise geschnittene Darstellung des Antriebs gemäß einem ersten Ausführungsbeispiel,
- Fig. 2: eine Seitenansicht des Antriebs gemäß Fig. 1,
- Fig. 3: eine teilweise geschnittene Darstellung des Antriebs gemäß einem zweiten Ausführungsbeispiel und
- Fig. 4: eine teilweise geschnittene Darstellung des Antriebs gemäß einem dritten Ausführungsbeispiel.

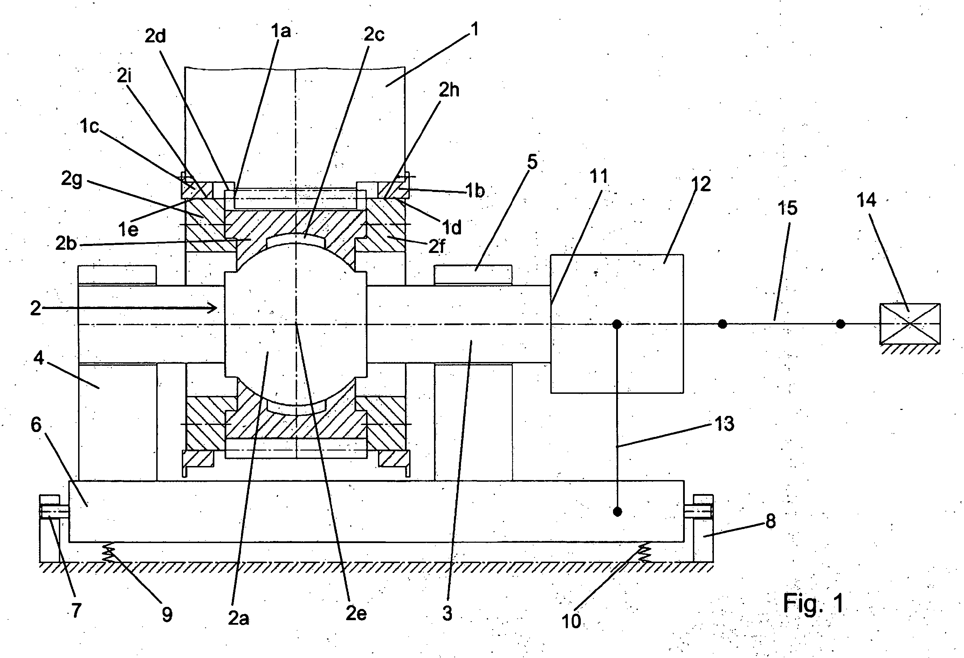

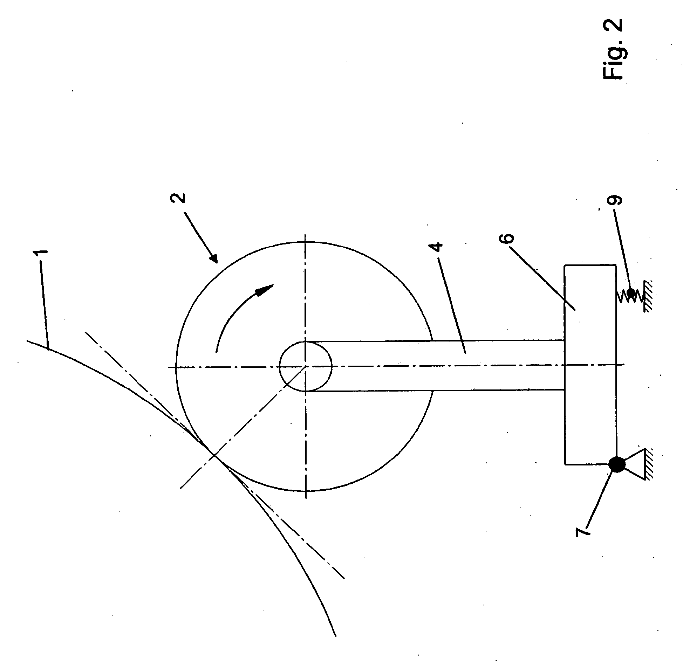

In den Figuren 1 und 2 ist ein Antrieb für eine Drehtrommel, insbesondere für einen Drehrohrofen für die Zementherstellung, dargestellt. Er besteht im Wesentlichen aus einem Zahnkranz 1, der drehfest auf der Außenumfangsseite einer nicht näher dargestellten Drehtrommel befestigbar ist und einem mit dem Zahnkranz 1 in Verzahnungseingriff stehendes Ritzel 2, das kippbeweglich und drehfest auf einer Antriebswelle 3 angeordnet ist. Die Antriebswelle 3 ist auf beiden Seiten des Ritzels 2 in Lagern 4, 5 gelagert, die wiederum auf einem Grundrahmen 6 montiert sind.

Das Ritzel 2 ist vorzugsweise in axialer Richtung in den Lagern 4, 5 der Antriebswelle 3 verschieblich. Auch kann das Ritzel 2 in axialer Richtung durch den Zahnkranz 1 geführt werden.

Das kippbewegliche Ritzel 2 weist einen Ritzelinnenkörper 2a und einen Ritzelaußenkörper 2b auf, die zur Übertragung der Drehbewegung der Antriebswelle 3 über eine Bogenverzahnung 2c miteinander gekoppelt sind. Der Ritzelaußenkörper 2b weist weiterhin eine mit dem Zahnkranz 1 in Zahneingriff kommende Verzahnung 2d auf. Der Ritzelinnenkörper 2a weist eine kugelkalottenartige Oberfläche auf, an welcher der Ritzelaußenkörper 2b sphärisch gelagert ist. Die Übertragung des Drehmomentes vom Ritzelinnenkörper 2a, der drehfest mit der Antriebswelle 3 verbunden ist, auf den Ritzelaußenkörper 2b erfolgt über die Bogenverzahnung 2c.

Durch die sphärische Lagerung und die Bogenverzahnung hat der Ritzelaußenkörper 2b zwei Drehfreiheitsgrade um den Mittelpunkt 2e der sphärischen Lagerung. Zwischen der Verzahnung 2d des Ritzels 2 und der mit dieser zusammenwirkenden Verzahnung 1a des Zahnkranzes besteht ein kraftschlüssiger Verzahnungseingriff. Der Ritzelaußenkörper. 2b folgt einen etwaigen Taumelschlag des Zahnkranzes 1, wenn die ungleiche Lastverteilung über die Breite der Verzahnung die Reibkräfte in der sphärischen Lagerung und der Bogenverzahnung 2c überwindet.

Ein etwaiger Radialschlag des Zahnkranzes 1 wird durch einen formschlüssigen Wälzkontakt des Ritzels 2 mit dem Zahnkranz 1 ausgeglichen. Hierzu sind am Zahnkranz 1 zwei rotationssymmetrische Absätze 1b, 1c befestigt, die jeweils eine zylindrische Wälzbahn 1d, 1e aufweisen. In entsprechender Weise sind am Ritzel 2, insbesondere am Ritzelaußenkörper 2b, entsprechende rotationssymmetrische Absätze 2f, 2g angebracht, die zylindrische Kontaktflächen 2h, 2i aufweisen, wobei jeweils eine Kontaktfläche 2h bzw. 2i mit einer Wälzbahn 1d bzw. 1e des Zahnkranzes in Wälzkontakt steht. Die Kontaktflächen 2h, 2i des Ritzels 2 weisen einen Durchmesser auf, der dem Durchmesser des Wälzkreises der Verzahnung 2d des Ritzels 2 entspricht. In entsprechender Weise weisen die Wälzbahnen 1d, 1e des Zahnkranzes 1 einen Durchmesser auf, der dem Durchmesser des Wälzkreises der Verzahnung 1a des Zahnkranzes 1 entspricht.

Damit der Wälzkontakt zwischen Zahnkranz 1 und Ritzel zustande kommt, ist der Grundrahmen 6 schwenkbeweglich in Lagern 7, 8 gehaltert. Federelemente 9, 10 stellen dabei sicher, das auch im Stillstand des Antriebs ein Kontakt zwischen den Kontaktflächen des Ritzels 2 und den Wälzbahnen des Zahnkranzes 1 aufrechterhalten bleibt. Die Kontaktflächen 2h, 2i werden durch die Umfangskraft (Antriebskraft) der Verzahnung und durch die zusätzlichen Federelemente 9, 10 auf die zugehörigen Wälzbahnen des Zahnkranzes 1 gedrückt. Mit dieser relativ einfachen Konstruktion kann das Ritzel 2 einem etwaigen Radialschlag des Zahnkranzes unmittelbar folgen, sodass zu jeder Zeit ein optimaler Eingriff zwischen Zahnkranz und Ritzel gewährleistet wird. Auf diese Weise können Überlastungen der Verzahnung und etwaige Schäden derselben zuverlässig verhindert werden.

Die Antriebswelle 3 ist über eine Schnittstelle 11 mit einen Hauptgetriebe 12 derart verbunden, dass das Hauptgetriebe 12 mit der Antriebswelle 3 einer etwaigen Schwenkbewegung des Grundrahmens 6 folgt. Zwischen Hauptgetriebe 12 und dem Grundrahmen 6 ist eine schematisch angedeutete Drehmomentstütze 13 vorgesehen.

Die Schnittstelle ist zweckmäßigerweise so ausgelegt, dass unterschiedliche Fertiger bzw. Anbieter von Vorgelege und Hauptgetriebe möglich sind. Weiterhin ist ein ortsfest angeordneter Antriebsmotor 14 über eine Gelenkwelle 15 mit dem Hauptgetriebe 12 verbunden, wobei die mit dem Hauptgetriebe 12 verbundene Gelenkwelle 15 in Richtung der Antriebswelle (wie dargestellt) oder winklig hierzu angeordnet werden kann. Durch diese Konstruktion ist das Hauptgetriebe 12 auf der Hochmomentenseite über die Schnittstelle direkt, d. h. ohne zusätzliche Gelenkwelle, an die Antriebswelle 3 angekoppelt. Die am Hauptgetriebe 12 vorgesehene Drehmomentstütze 13 und die Gelenkwelle 15 können zweckmäßigerweise eine Axialbewegung der Antriebswelle 3 aufnehmen.

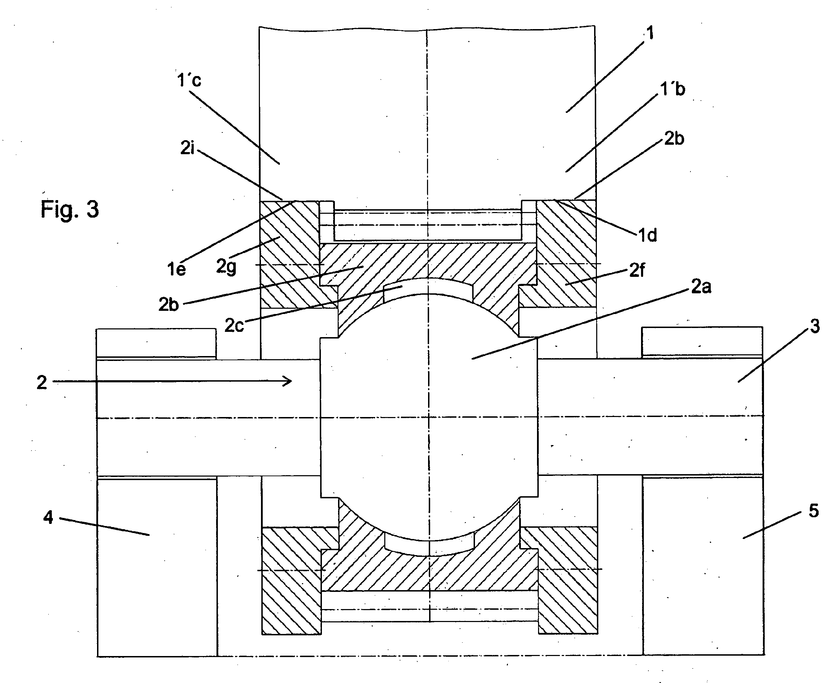

Im Ausführungsbeispiel gemäß Fig. 1 werden die rotationssymmetrischen Absätze 1b, 1c durch konzentrische Ringe gebildet, die am Zahnkranz befestigt sind. Fig. 3 zeigt einen Antrieb gemäß einem zweiten Ausführungsbeispiel, das sich vom ersten Ausführungsbeispiel im Wesentlichen nur dadurch unterscheidet, dass die Absätze 1'b und 1'c einstückig mit dem Zahnkranz 1 ausgebildet sind.

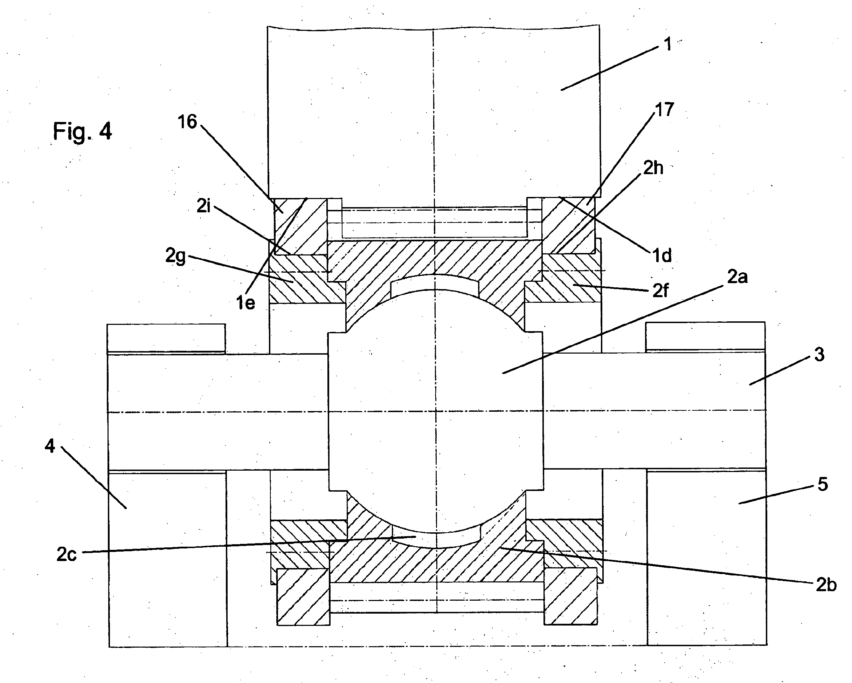

Eine weitere Möglichkeit besteht darin, das zwischen Wälzbahn 1e und der Kontaktfläche 2i bzw. der Wälzbahn 1d und der Kontaktfläche 2h ein konzentrisch um die Antriebswelle 3 ausgebildeter und drehbar gelagerter Ring 16 bzw. 17 vorgesehen ist (siehe Fig. 4). Die beiden Ringe sind dabei axial gesichert, indem sie zwischen dem Ritzelaußenkörper 2b und den Absätzen 2g bzw. 2f angeordnet sind. Über eine Spielpassung können die Ringe 16 , 17 eine Relativbewegung zu den Kontaktflächen 2h, 2i der Absätze 2f und 2g ausführen.

Mit dem oben beschriebenen Antrieb kann auf einfache, bewährte und kostengünstige Konstruktionselemente zurückgegriffen werden. Durch den Wälzkontakt zwischen Ritzel und Zahnkranz ist weiterhin, unabhängig von Betriebszustand, immer ein optimaler Zahneingriff gegeben. Weiterhin kann auf der Hochmomentenseite durch die direkte Ankopplung des Hauptgetriebes 12 an die Antriebswelle 3 auf zwischengeschaltete und schadensanfällige Gelenkwellen verzichtet werden.

## Patentansprüche

1. Antrieb für eine Drehtrommel mit
a. einem Zahnkranz (1), der drehfest auf der Außenumfangsseite der Drehtrommel befestigbar ist,
b. einem mit dem Zahnkranz (1) in Verzahnungseingriff stehendes Ritzel (2), das kippbeweglich und drehfest auf einer Antriebswelle (3) angeordnet ist, wobei das Ritzel (2) mit seiner Antriebswelle (3) relativ zum Zahnkranz (1) schwenkbeweglich gehaltert ist und
c. einem Antriebsmotor (14) zum Antreiben der Antriebswelle (3)
wobei, dass das Ritzel (2) neben dem Verzahnungseingriff auch in einem formschlüssigen Wälzkontakt mit dem Zahnkranz (1) steht,
**dadurch gekennzeichnet, dass** zur Herstellung des formschlüssigen Wälzkontakts auf beiden Seiten des Zahnkranzes (1) konzentrisch zum Zahnkranz angeordnete zylindrische Wälzbahnen (1d, 1e) ausgebildet sind, und das Ritzel (2) zwei konzentrisch um die Antriebswelle (3) ausgebildete, zylindrische Kontaktflächen (2h, 2i) aufweist, wobei jeweils eine Kontaktfläche des Ritzels (2) mit einer Wälzbahn des Zahnkranzes (1) in Wälzkontakt steht, sodass Radialschläge des Zahnkranzes auffangbar sind.

2. Antrieb nach Anspruch 1, **dadurch gekennzeichnet, dass** die Kontaktflächen (2h, 2i) des Ritzels (2) einen Durchmesser aufweisen, der dem Durchmesser des Wälzkreises des Ritzels (2) entspricht.

3. Antrieb nach Anspruch 1 oder 2, **dadurch gekennzeichnet, dass** die Wälzbahnen (1d, 1e) des Zahnkranzes (1) einen Durchmesser aufweisen, der dem Durchmesser des Wälzkreises des Zahnkranzes (1) entspricht.

4. Antrieb nach Anspruch 1, **dadurch gekennzeichnet, dass** die Kontaktflächen (2h, 2i) durch rotationssymmetrische Absätze (2f, 2g) am Ritzel (2) gebildet werden.

5. Antrieb nach Anspruch 1, **dadurch gekennzeichnet, dass** die Wälzbahnen (1d, 1e) durch rotationssymmetrische Absätze (1b, 1c) am Zahnkranz (1) gebildet werden.

6. Antrieb nach Anspruch 1, **dadurch gekennzeichnet, dass** das kippbewegliche Ritzel einen Ritzelinnenkörper (2a) und einen Ritzelaußenkörper (2b) aufweist, die zur Übertragung der Drehbewegung der Antriebswelle (3) über eine Bogenverzahnung (2c) miteinander gekoppelt sind und der Ritzelaußenkörper (2b) eine mit dem Zahnkranz (1) in Eingriff kommende Verzahnung (2d) aufweist.

7. Antrieb nach Anspruch 6, **dadurch gekennzeichnet, dass** der Ritzelaußenkörper (2b) sphärisch am Ritzelinnenkörper (2a) gelagert ist.

8. Antrieb nach Anspruch 1, **dadurch gekennzeichnet, dass** das Ritzel (2) und der Zahnkranz (1) in axialer Richtung relativ zueinander verschiebbar sind.

9. Antrieb nach Anspruch 1, **dadurch gekennzeichnet, dass** zwischen Ritzel (2) und Zahnkranz (1) wenigstens ein konzentrischer und drehbar gelagerter Ring (16;17) zur Erzeugung des formschlüssigen Wälzkontakts vorgesehen ist.

10. Antrieb nach Anspruch 1, **dadurch gekennzeichnet, dass** die Antriebswelle (3) direkt an ein Hauptgetriebe (12) angekoppelt ist.

11. Antrieb nach Anspruch 1, **dadurch gekennzeichnet, dass** das Ritzel (2) in axialer Richtung in Lagern (4, 5) der Antriebswelle (3) verschieblich ist.

12. Antrieb nach Anspruch 1, **dadurch gekennzeichnet, dass** das Ritzel (2) in axialer Richtung durch den Zahnkranz (1) geführt wird.

13. Antrieb nach Anspruch 1, **dadurch gekennzeichnet, dass** der Antriebsmotor (14) über eine Gelenkwelle (15) mit einem Hauptgetriebe (12) verbunden ist, wobei eine am Hauptgetriebe (12) vorgesehene Drehmomentstütze (13) und die Gelenkwelle (15) eine Axialbewegung der Antriebswelle (3) aufnehmen.

14. Antrieb nach Anspruch 1, **dadurch gekennzeichnet, dass** Zahnkranz (1) und Ritzel (2) gehärtete Zahnflanken aufweisen.

## Claims

1. Drive for a rotary drum comprising
a. a ring gear (1), which can be fastened to the outer circumferential surface of the rotary drum for rotation therewith,
b. a pinion (2) meshing with the ring gear (1) and arranged on a drive shaft (3) for rotation therewith and for tilting movement, the pinion (2) being held with its drive shaft (3) in such a way that it can pivot relative to the ring gear (1), and
c. a drive motor (14) for driving the drive shaft (3)
wherein, in addition to the meshing, the pinion (2) is also in interlocking rolling contact with the ring gear (1),
**characterised in that** in order to produce interlocking rolling contact, cylindrical rolling paths (1d, 1e) are formed on both sides of the ring gear (1), concentric to the ring gear, and the pinion (2) comprises two cylindrical contact surfaces (2h, 2i), formed concentric to the drive shaft (3), each contact surface of the pinion (2) being in rolling contact with a rolling path of the ring gear (1) in order to compensate radial run-outs of the ring gear.

2. Drive according to claim 1, **characterised in that** the contact surfaces (2h, 2i) of the pinion (2) have a diameter which corresponds to the diameter of the pitch circle of the pinion (2).

3. Drive according to either claim 1 or claim 2, **characterised in that** the rolling paths (1 d, 1 e) of the ring gear (1) have a diameter which corresponds to the diameter of the pitch circle of the ring gear (1).

4. Drive according to claim 1, **characterised in that** the contact surfaces (2h, 2i) are formed on the pinion (2) by rotationally symmetrical shoulders (2f, 2g).

5. Drive according to claim 1, **characterised in that** the rolling paths (1 d, 1 e) are formed on the ring gear (1) by rotationally symmetrical shoulders (1 b, 1 c).

6. Drive according to claim 1, **characterised in that** the tiltable pinion comprises an internal pinion body (2a) and an external pinion body (2b), which are coupled to each other via curved teeth (2c) to transmit the rotation of the drive shaft (3) and the external pinion body (2b) comprises teeth (2d) which engages the ring gear (1).

7. Drive according to claim 6, **characterised in that** the external pinion body (2b) is mounted spherically on the internal pinion body (2a).

8. Drive according to claim 1, **characterised in that** the pinion (2) and the ring gear (1) are displaceable relative to each other in an axial direction.

9. Drive according to claim 1, **characterised in that** at least one concentric and rotatably mounted ring (16; 17) is provided between the pinion (2) and the ring gear (1) so as to produce the interlocking rolling contact.

10. Drive according to claim 1, **characterised in that** the drive shaft (3) is directly coupled to a main gear (12).

11. Drive according to claim 1, **characterised in that** the pinion (2) is displaceable in an axial direction in bearings (4, 5) of the drive shaft (3).

12. Drive according to claim 1, **characterised in that** the pinion (2) is guided through the ring gear (1) in an axial direction.

13. Drive according to claim 1, **characterised in that** the drive motor (14) is connected via a universal-joint shaft (15) to the main gear (12), wherein a torque bracket (13) provided on the main gear (12) and the universal-joint shaft (15) accommodate an axial movement of the drive shaft (3).

14. Drive according to claim 1, **characterised in that** the ring gear (1) and the pinion (2) have hardened tooth profiles.

## Revendications

1. Entraînement pour un tambour rotatif comprenant
a. une couronne dentée (1) qui peut être fixée, solidaire en rotation, sur le côté circonférentiel extérieur du tambour rotatif,
b. un pignon (2) se trouvant en prise par engrènement avec la couronne dentée (1), lequel pignon est disposé en étant mobile par basculement et solidaire en rotation sur un arbre d'entraînement (3), où le pignon (2), associé à son arbre d'entraînement (3), est maintenu en étant mobile de façon pivotante, par rapport à la couronne dentée (1), et
c. un moteur d'entraînement (14) servant à entraîner l'arbre d'entraînement (3),
où le pignon (2), en plus d'être en prise par engrènement avec la couronne dentée (1), se trouve aussi en contact roulant, par complémentarité de forme, avec ladite couronne dentée,
**caractérisé en ce que** des chemins de roulement cylindriques (1d, 1e), disposés de façon concentrique par rapport à la couronne dentée, sont configurés pour fournir le contact roulant, par complémentarité de forme, des deux côtés de la couronne dentée (1), et le pignon (2) présente deux surfaces de contact cylindriques (2h, 2i) configurées de façon concentrique autour de l'arbre d'entraînement (3), où une surface de contact du pignon (2) est à chaque fois en contact roulant avec un chemin de roulement de la couronne dentée (1), de sorte que des battements radiaux de la couronne dentée peuvent être amortis.

2. Entraînement selon la revendication 1, **caractérisé en ce que** les surfaces de contact (2h, 2i) du pignon (2) présentent un diamètre qui correspond au diamètre du cercle de roulement du pignon (2).

3. Entraînement selon la revendication 1 ou 2, **caractérisé en ce que** les chemins de roulement (1d, 1e) de la couronne dentée (1) présentent un diamètre qui correspond au diamètre du cercle de roulement de la couronne dentée (1).

4. Entraînement selon la revendication 1, **caractérisé en ce que** les surfaces de contact (2h, 2i) sont formées, sur le pignon (2), par des épaulements (2f, 2g) symétriques en rotation.

5. Entraînement selon la revendication 1, **caractérisé en ce que** les chemins de roulement (1d, 1e) sont formés, sur la couronne dentée (1), par des épaulements (1b, 1c) symétriques en rotation.

6. Entraînement selon la revendication 1, **caractérisé en ce que** le pignon mobile par basculement présente un corps intérieur de pignon (2a) et un corps extérieur de pignon (2b) qui, pour la transmission du mouvement de rotation de l'arbre d'entraînement (3), sont couplés l'un à l'autre par une denture hélicoïdale (2c), et le corps extérieur de pignon (2b) présente une denture (2d) venant en prise avec la couronne dentée (1).

7. Entraînement selon la revendication 6, **caractérisé en ce que** le corps extérieur de pignon (2b) est monté de façon sphérique sur le corps intérieur de pignon (2a).

8. Entraînement selon la revendication 1, **caractérisé en ce que** le pignon (2) et la couronne dentée (1) peuvent être mobiles l'un par rapport à l'autre dans la direction axiale.

9. Entraînement selon la revendication 1, **caractérisé en ce qu'**il est prévu, entre le pignon (2) et la couronne dentée (1), au moins une bague concentrique (16 ; 17) et montée en rotation, pour produire le contact roulant obtenu par complémentarité de forme.

10. Entraînement selon la revendication 1, **caractérisé en ce que** l'arbre d'entraînement (3) est accouplé directement à une transmission principale (12).

11. Entraînement selon la revendication 1, **caractérisé en ce que** le pignon (2) est mobile, dans la direction axiale, dans des paliers (4, 5) de l'arbre d'entraînement (3).

12. Entraînement selon la revendication 1, **caractérisé en ce que** le pignon (2) est guidé, dans la direction axiale, par la couronne dentée (1).

13. Entraînement selon la revendication 1, **caractérisé en ce que** le moteur d'entraînement (14) est relié à une transmission principale (12) par un arbre à cardan (15), où un support de couple (13) prévu sur la transmission principale (12) et l'arbre à cardan (15) captent un mouvement axial de l'arbre d'entraînement (3).

14. Entraînement selon la revendication 1, **caractérisé en ce que** la couronne dentée (1) et le pignon (2) présentent des flancs de dents durcis.
